# EUROPEAN PATENT APPLICATION

(11) **EP 4 742 133 A1**
(43) Date of publication of application: **13.05.2026**
(21) Application number: 25207305.1
(22) Date of filing: 07.10.2025
(51) Int. Cl.: G06Q 30/02, G06Q 50/16

(54) **MARKET-LEVEL HPI VALUATION**

(30) Priority: 12.11.2024 US 202418944563
(71) Applicant: Quantarium Group, LLC, Bellevue, Washington 98007 (US)
(72) Inventor: FANARU, Adrian, Sammamish, 98074 (US); SMINTINA, Ioan, Kirkland, 98033 (US); ARON, Andrei T., Woodinville, 98072 (US); COCIORVA, Petru, Redmond, 98052 (US)
(74) Representative: Mathisen & Macara LLP

(57) **Abstract**

Systems and methods are disclosed for generating a market-level house price index (HPI) for property valuation. In certain embodiments, a method may comprise executing a market-level HPI valuation operation via a computing system to generate an HPI for a selected tailored property market at runtime. The method may include receiving a geographic boundary selection to define an area for the selected tailored property market, identifying a plurality of properties within the area, determining historical value estimates for the plurality of properties, generating the market-level HPI for the selected tailored property market based on the historical value estimates, and adjusting historical sale prices of the plurality of properties to current market value based on the market-level HPI.

## Description

### TECHNICAL FIELD

Various embodiments of the present technology generally relate to computer and software systems and services, and in particular to systems and methods for generating a house price index (HPI) or house valuation index (HVI) for a specific, selected or tailored market.

### SUMMARY

In certain embodiments, a method may comprise executing a market-level house price index (HPI) valuation operation via a computing system to generate an HPI for a selected tailored property market at runtime. The method may include receiving a geographic boundary selection to define an area for the selected tailored property market, identifying a plurality of properties within the area, determining historical value estimates for the plurality of properties, generating the market-level HPI for the selected tailored property market based on the historical value estimates, and adjusting historical sale prices of the plurality of properties to current market value based on the market-level HPI.

In certain embodiments, a memory device may store instructions that, when executed, cause a processor to execute a market-level house price index (HPI) valuation operation via a computing system to generate an HPI for a selected tailored property market at runtime. When executed, the instructions may cause the processor to receive a geographic boundary selection to define an area for the selected tailored property market, identify a plurality of properties within the area, determine historical value estimates for the plurality of properties, generate the market-level HPI for the selected tailored property market based on the historical value estimates, and adjust historical sale prices of the plurality of properties to current market value based on the market-level HPI.

In certain embodiments, an apparatus may comprise a processor and a memory device storing instructions that cause the processor to execute a market-level house price index (HPI) valuation operation to generate an HPI for a selected tailored property market at runtime. The processor may receive a geographic boundary selection to define an area for the selected tailored property market, identify a plurality of properties within the area, determine historical value estimates for the plurality of properties, generate the market-level HPI for the selected tailored property market based on the historical value estimates, and adjust historical sale prices of the plurality of properties to current market value based on the market-level HPI.

### BRIEF DESCRIPTION OF THE DRAWINGS

FIG. 1 is a diagram of an example system configured to perform market-level HPI valuation, in accordance with certain embodiments of the present disclosure;
FIG. 2 depicts an example user interface for a system configured to perform market-level HPI valuation, in accordance with certain embodiments of the present disclosure;
FIG. 3 depicts an example user interface for a system configured to perform market-level HPI valuation, in accordance with certain embodiments of the present disclosure;
FIG. 4 depicts an example data table for a system configured to perform market-level HPI valuation, in accordance with certain embodiments of the present disclosure;
FIG. 5 depicts a flowchart of an example method for market-level HPI valuation, in accordance with certain embodiments of the present disclosure; and
FIG. 6 is a diagram of an example system configured to perform market-level HPI valuation, in accordance with certain embodiments of the present disclosure.

### DETAILED DESCRIPTION

In the following detailed description of certain embodiments, reference is made to the accompanying drawings which form a part hereof, and in which are shown by way of illustration of example embodiments. It is also to be understood that features of the embodiments and examples herein can be combined, exchanged, or removed, other embodiments may be utilized or created, and structural changes may be made without departing from the scope of the present disclosure.

In accordance with various embodiments, the methods and functions described herein may be implemented as one or more software programs running on a computer processor or controller. Dedicated hardware implementations including, but not limited to, application specific integrated circuits, programmable logic arrays, and other hardware devices can likewise be constructed to implement the methods and functions described herein. Methods and functions may be performed by modules or nodes, which may include one or more physical components of a computing device (e.g., logic, circuits, processors, etc.) configured to perform a particular task or job, or may include instructions that, when executed, can cause a processor to perform a particular task or job, or any combination thereof. Further, the methods described herein may be implemented as a computer readable storage medium or memory device including instructions that, when executed, cause a processor to perform the methods.

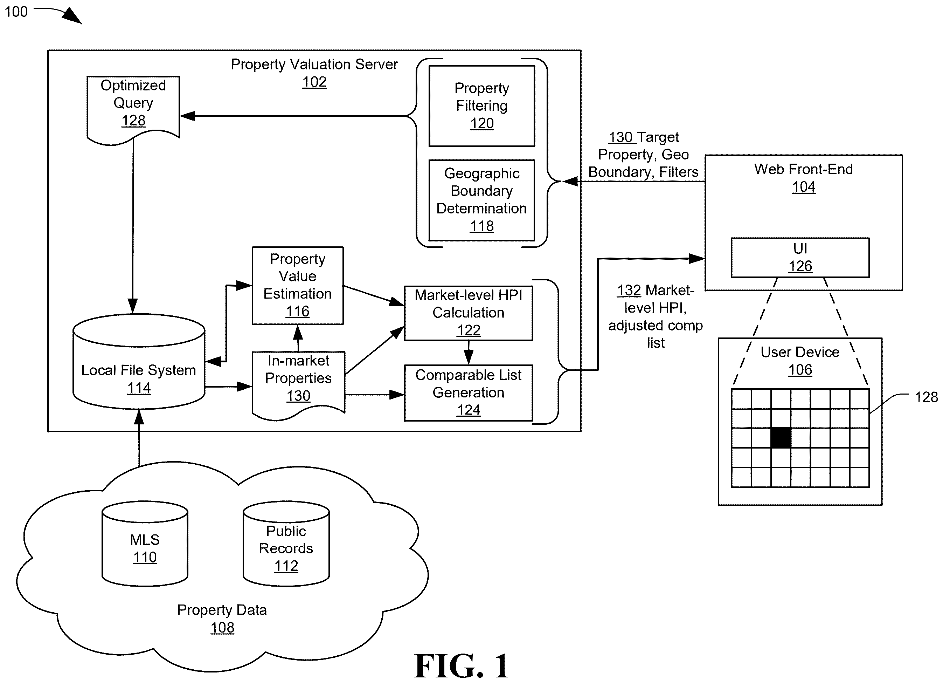

FIG. 1 depicts an example system 100 configured to perform market-level HPI valuation, in accordance with certain embodiments of the present disclosure. In particular, system 100 provides an example set of elements for defining a market of selected property features, identifying properties within the market, generating a market-level HPI at runtime for the identified properties, and using the market-level HPI to price-adjust sale prices of properties within the market. System 100 may include a property valuation server 102, a web front-end 104, a user device 106, and one or more property data record sources 108. Property valuation server 102, web front-end 104, user device 106, property data sources 108, or any of their sub-components, may each be implemented via one or more computing systems, servers, or other processing devices, data storage or memory devices, or other computing apparatuses. The computing systems may implement functional modules to perform the operations described herein. In some embodiments, the elements of system 100 may include cloud computing modules, such as cloud servers configured to host and implement computational pods for performing the described operations. The systems may communicate over one or more network connections, either wired or wireless, to provide and receive data.

Property valuation and appraisal may be an important practice for various real estate purposes, including property sales, financing, taxation, and other applications. Properties may include single family homes, apartments, retail spaces, empty lots, or other properties. Property valuation may be based upon market demand; however, demand for property can vary significantly based on a multitude of factors, including timeframe, sales trends, property location, property size, school and taxing districts, and any number of considerations regarding improvements on the land. For example, a home's square footage, number of bedrooms or baths, age, and other factors may have a significant impact on a property's market value. Accordingly, property valuation may rely on identifying sales of comparable properties, or "comps", and extrapolating a property value of the target property based on how it compares to the comps.

At times, there may be a limited number of comparable sales or active listings that are close in time to when an appraiser is attempting to determine a value of a target property. For example, a lack of relevant recent sales nearby may force a property valuer to look for more geographically distant sales, which may reduce the relevance, or to look farther back in time, which sale values may not accurately reflect current market conditions.

When looking at historical sales, traditional valuation approaches may rely on home value index (HVI) or house price index (HPI)(which terms may be used synonymously herein) to adjust the price of sales to an approximation of their current value. In some examples, the HPI/HVI may be a broad measure of the movement of single-family property prices in the United States. The HPI may be published and updated by the Federal Housing Finance Agency (FHFA). Aside from serving as an indicator of house price trends, the HPI may also function as an analytical tool for estimating changes in the rates of mortgage defaults, prepayments, and housing affordability. HVI/HPI may be used to adjust the sale price of a potential comparable to the present time or the effective date of a valuation.

However, HPI may be pre-calculated at a large geographical region, such as Zip code, county, or MSA (metro statistical area), and may not account for any particular submarkets, such as single-family homes vs. condos, properties above or below certain values, etc. For example, sales of smaller homes may be up, while larger homes may be down, or sales in one neighborhood may be stable while sales in a nearby neighborhood are up, but the large-area HPI values may not reflect these distinctions. While using the pre-calculated HPIs / HVIs at a macro level to understand long term trends and shifts in the market may be appropriate, the current HVI / HPI methods show their limitations when used at a micro level. When analyzing a specific real-estate property and the most similar sales, multiple submarkets, sometimes with very different behavior, exist in the context of those predefined or administrative regions used for HPI. Home values and the fluctuations of those values over time can be very different between different 'neighborhoods' even in the same zip code.

Therefore, using an HPI aggregated at a macro level in the process of valuation for a specific property can lead to significant errors in the process, because the federal or large-area HPI values may not enable a valuer to accurately adjust comp values for a particular or selected market. Accordingly, when attempting to value a target property with similar comparables, there may be insufficient recent sales to compile a relevant comparable list, and the HPI values may not accurately adjust older sales within the desired market to provide reliable valuation data. Based on these factors, there exists a need for improved HPI valuation.

The proposed system 100 may perform a method to compute a market-level HPI at runtime that accounts for a user-defined market, such as based on property characteristics, dynamically-defined geographic boundaries, or both. In some examples, an appraiser or any other valuation professional, or an automated system for determining relevant neighborhood boundaries, can define the specific geo-boundaries for a specific subject property, further apply filters on important subject characteristics (e.g., property type, age, lot size, living square footage, etc.) and get, calculated at runtime, an HPI that can be used to time-adjust the price for all comparables that are located in the particular boundaries, and conforming with the selected filters. This market-level HPI may allow much more accurate valuation adjustments for historical sales of relevant properties, enabling a valuation professional to produce valuation estimates for a target property based on more relevant comps and with higher accuracy.

To implement a market-level HPI for use in valuations on target properties, statistical reliability in the sub-market valuations should be considered. In order for the generated sub-market indexes to be reliable, a significant number of data points may be required in their calculation. This issue may be solved by using valuation estimates for all properties in the defined market instead of just sales. The valuations may be based on existing sales (comparables), so the valuations may be a reliable proxy overall. In order to compute market-level HPIs in 'real-time' or 'on-demand', the underlying computing system may need to be able to locate, filter, and analyze a large amount of data in a short amount of time. This may lend itself to bulk processing at servers or cloud computing environments, although this disclosure is not limited thereto.

In addition to computing a market-level HPI, statistical analysis may be used on the sub-market data to calculate confidence levels for the generated HPI. When only a few properties are used to determine an HPI value, the accuracy or "confidence" may be low. By including more properties, the accuracy or confidence level may be improved. Accordingly, the number of properties included in the market-level HPI determination (e.g., using both sales and non-sale property value estimates) may be used as a proxy of the confidence level in the HPI value.

An advantage of the proposed method is that the HPI need not be a very generic MSA-level index, but can account for the specific characteristics of the subject property, resulting in more accurate time adjustments for any comparables used in a valuation process.

In the embodiment of system 100, the property valuation server 102 may be configured to process property data 108 for many or all properties in each region, including determining a value estimation for that property for a point in time at selected intervals (e.g., once a month). These value estimates may be stored as a data series of values over time for each evaluated property. When a geographic boundary or proximity is selected to define the boundaries of a market for a target property, and sub-market parameters are selected (e.g., number of bedrooms, square footage, etc.), the property valuation server 102 may determine matching properties that fall within the boundary and match the selected parameters. The property valuation server 102 may then utilize the data series of valuations over time to generate HPI values for the selected market specifically, in order to adjust the value estimate for historical sales within that market. A market level HPI may itself be a data series of values (e.g., month to month), which can be used to adjust a property sale price from the data at which the sale occurred up through the present (or data of valuation for a target property). For example, if a property sold for $500,000 in May of 2018, and the HPI for the selected market increased by 1% from May to June 2018, then the estimated value for that property sale in June may have been $505,000. This adjustment may be further applied, month-by-month, until the sale estimate has been brought up to date. The value adjusted list of comparable sales may be provided to a user, for example via a web front-end 104 and a user device 106.

The property valuation server 102 may perform property data 108 analysis (e.g., searching records, determining sale prices, generating automated valuation estimates for properties for a given time period, etc.), market-level HPI generation, valuation adjustments, or other operations automatically (e.g., on a selected schedule), in response to an instruction from an operator (e.g., an administrator of property valuation server 102), in response to a request initiated via a user device 106 accessing a web front-end 104 for the property valuation server 102, or according to other triggers. Operations of the property valuation server 102 may be performed via batch processing, in order to process the large volumes of data more efficiently. The property valuation server 102 may include a local file system 114, property value estimation module 116, geographic boundary determination module 118, property filtering module 120, market-level HPI calculation module 122, and comparable list generation module 124.

Web front-end 104 may include a website, mobile application, or other interface via which a user may access the services and operations of property valuation server 102. For example, a user may access the web front-end 104 to identify 130 a target property, to designate a geographic boundary or area radius of a market for the target property, and to select filters for parameters or attributes of properties that may define a sub-market most applicable to the target property. The web front-end 104 may also receive information 132, such as a market-level HPI for the selected market, or a list of sales of comparable properties meeting the selected geographic and parameter designations, with the sale prices adjusted based on a market-level HPI. The web front-end 104 may include a user interface (UI) module 126, such as a graphical user interface (GUI) via which a user may input data, interact with maps and tables, and receive data.

User device 106 may include any computing device via which a user may access the UI 126 of the web front-end 104. For example, user device 106 may include a smartphone or tablet, a personal computer or laptop, a set-top box or smart television, or other computing terminal. The user device 106 may have input functionality such as a touchscreen, mouse, keyboard, pointer device, or other input systems, as well as one or more output or displays, such as a visual display screen 128.

Property data sources 108 may include one or more data repositories of property sales records. The property data may include any combination of private databases and publicly available databases that are accessible by property valuation server 102, such as due to being hosted on the internet with access available for free or for a fee. Example property data sources 108 may include an MLS (multiple listing source) database 110, and a public records database 112. Public records databases 112 may be available for various states, cities, counties, municipalities, or other regions, and may include property records that are recorded to establish chain of title to various properties within the region.

In an example embodiment, property valuation server 102 may obtain sales records from property data sources 108, and may store the records to a local file system 114. Local file system 114 may be a private or proprietary memory device, database, data lake, or other data store and may not necessarily be locally situated with any other component of property valuation server 102. Local file system 114 may also include one or more service to manage or process queries to the local file system 114, such as an optimized index service to handle queries to identify properties that fall within a certain geographic boundary and with certain property characteristic filters applied. Property valuation server 102 may be configured to retrieve the sales records automatically (e.g., based on being configured to periodically check pre-configured web addresses for records not already in local file system 114), or the data may be stored or uploaded to local file system 114 by an operator or administrator. The sales records may include information such as a property address or legal description, date of sale, and sale price. The sales records may also include additional details that may be used to better compare properties, such as square footage of a plot of land, square footage of any buildings on the property, a number of bedrooms and bathrooms, a year the building was built, a number of floors, whether a home includes a garage or pool, how recently or well-updated a home was, or other factors that may be relevant to property valuation and appraisal.

The records in the local file system 114 may be used by the property value estimation module 116 to generate value estimates for properties within a region, including properties that were not sold. The property value estimation module 116 may employ an automated valuation model (AVM) or other process to generate a value estimate for properties. An AVM may be a service that combines mathematical or statistical modeling with databases of existing properties and transactions to calculate real estate values. The property value estimation module 116 may generate a value estimate for all or a plurality of properties within a region (e.g., county, state, nationwide, etc.), which may be updated periodically. The property value estimation module 116 may generate property value estimates that are useful for a variety of purposes, but may not be as precise or tailored as a manually-performed appraisal of a target property based on a list of most relevant comparable property sales. The value estimates generated by the property value estimation module 116 may be stored to the local file system 114, and may provide data series' of values for each property over time. The data series for each property may provide historical value estimates covering a span of time.

Geographic boundary determination module 118 may receive the geo boundary selection 130 from the web front-end 104, and use it to determine a selected geographical region. In some embodiments, the geographic boundary determination module 118 may determine which properties lie within the selected region, for example by generating an optimized query 128 with the boundary information that may be executed at the local file system. For example, a user may select a target property, and then specify a geographic radius of three miles from the target property. This selection may create a circle on a map centered on the target property, and the geographic boundary determination module 118 may use this circle to determine which properties are located within the circle. In another example, a user (e.g., via user device 106 and UI module 126) may draw the boundaries of a geographic region, such as by drawing a sequence of connected lines that enclose a geographic space, potentially within an irregularly-shaped polygon. The geographic boundary determination module 118 may likewise determine which properties lie within the polygon. In some embodiments, the geographic boundary may be defined by a computing algorithm rather than user input. For example, an algorithm may use various factors (such as property parameters, similar value fluctuations of properties, etc.) to identify relevant or related "neighborhoods" for a selected target property.

Property filtering module 120 may receive property filter information 130, and apply it to create an optimized query 128 to be executed on the local file system 114. For example, a user may select filters that only properties having 3-4 bedrooms, 2-3 baths, and a lot of 5,000 or more square feet should be considered as part of the desired submarket. In some embodiments, the filter information may be combined with geographic boundary information from the geographic boundary determination module 118 to create the optimized query 128. The optimized query 128 may be executed at the local file system 114 to identify a list of in-market properties 130 within the geographic boundary that meet the filtering criteria. The filters from the property filtering module 120 may enable the property valuation server to filter out any properties within the selected geographic boundary that do not meet the specified criteria (or alternately, to select only properties that do meet the criteria). The identified list of filtered properties 130 may constitute the selected market or sub-market for the purpose of generating a market-level HPI. The filtered property list 130 may be provided to market-level HPI calculation module 122, the comparable list generation module 124, stored to local file system 114, provided to web front-end 104, or otherwise used by property valuation server 102.

Market-level HPI calculation module 122 may determine a market-level HPI data series based on the filtered property list 130 and the history of property value estimates from property value estimation module 116 (or retrieved from local file system 114). For example, the market-level HPI calculation module 122 may consider only the historical (e.g., monthly) value estimates for properties within the filtered property list 130 in order to generate an HPI data series relevant specifically to the in-market property list 130. The market level HPI values may be provided to the web front-end 104 via message 132, to a comparable list generation module 124, to local file system 114, or otherwise used by the property valuation server 102.

The comparable list generation module 124 may be configured to determine a list of most comparable properties to the target property, for example based on the in-market properties list 130. For example, the comparable list generation module 124 may identify the most recent sales from the filtered property list 130, the sales from the filtered property list 130 of properties most similar to the target property, or a combination thereof. The comp list may be limited to, e.g., a selected number of most recent or most similar sales, such as six, ten, or thirty sales. The comparable list generation module 124 may generate and assign a "similarity score" to property sales from the filtered list based on how similar they are to the target property, using various comparison criteria. Further, the comparable list generation module 124 may apply the market-level HPI data series to update the sale values of properties on the comp list. In this manner, even if the comparables list includes sales from months or even years prior, those sale values may be updated with HPI data that is specifically tailored to the market or sub-market identified for the target property, providing a highly relevant and accurate value estimation tool. The comps list generated by the comparable list generation module 124 may be saved to the local file system 114, provided to web front-end 104 via transfer 132, or otherwise utilized.

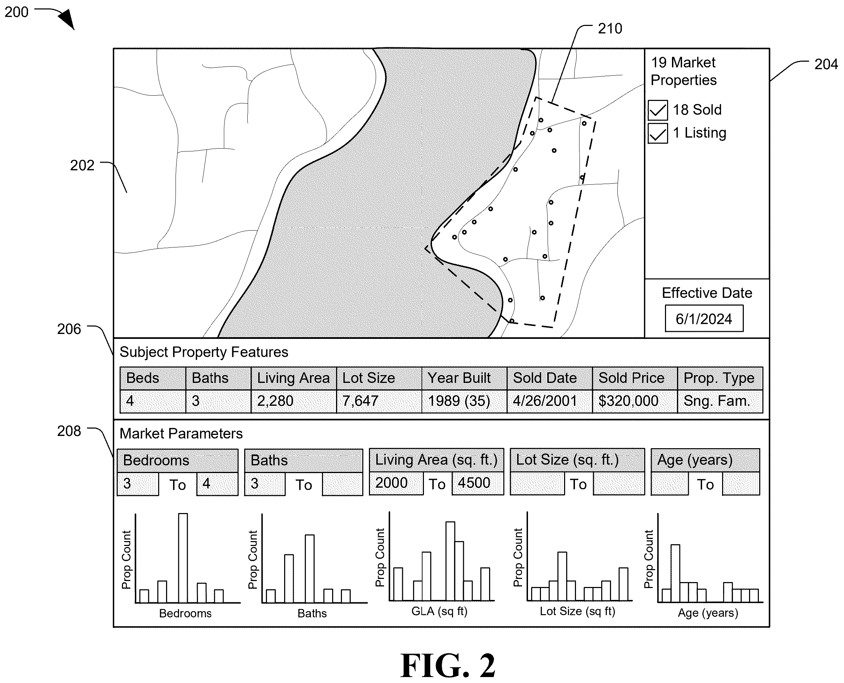

The web front-end 104, via UI 126, may provide the comps list to the user at user device 106. The comps list may be provided in various forms, such as lists, charts, or map representations on display 128. An example user interface for geographic selection and property filtering in market-level HPI valuation is described in regard to FIG. 2.

FIG. 2 depicts an example user interface 200 for a system configured to perform market-level HPI valuation, in accordance with certain embodiments of the present disclosure. In particular, interface 200 depicts a UI via which a user can select a target property for evaluation, designate a geographic boundary to define a market, and then specify property filters to further narrow the market or sub-market. The UI 200 may include a map display 202, a market properties bar 204, a subject property features display 206, and a market parameters display 208. The interface 200 may be generated or populated by a property valuation server or service 102, and may be presented via web front-end 104 as a UI 126, as described in regard to FIG. 1.

UI 200 may include a map depiction 202, which may show a geographical region or map area that may contain properties. A user may utilize the map 202 to select a target property for evaluation, such as by searching for the property (e.g., via address) or clicking on a desired property. A user may also utilize the map 202 to define a boundary of a market for the target property. For example, a user may specify a radius around the target property, or may draw a polygon 210 to define a market or neighborhood in a shape of the user's choice. In some example, properties (or a subset of all properties) within the selected geographic region may be highlighted on the map 202, and may also be represented on the market properties sidebar 204. For example, the map 202 and sidebar 204 may identify properties that have sold or are currently listed for sale within the specified geographic area.

The subject property features display 206 of UI 200 may list features or parameters of the selected target or subject property. The details of the subject property may include a number of bedrooms, a number of bathrooms, a living area (sq.ft.), a lot size (sq.ft.), a year built or age, a date the property was last sold, the price at which the property sold, and a property type of classification (e.g., single family home).

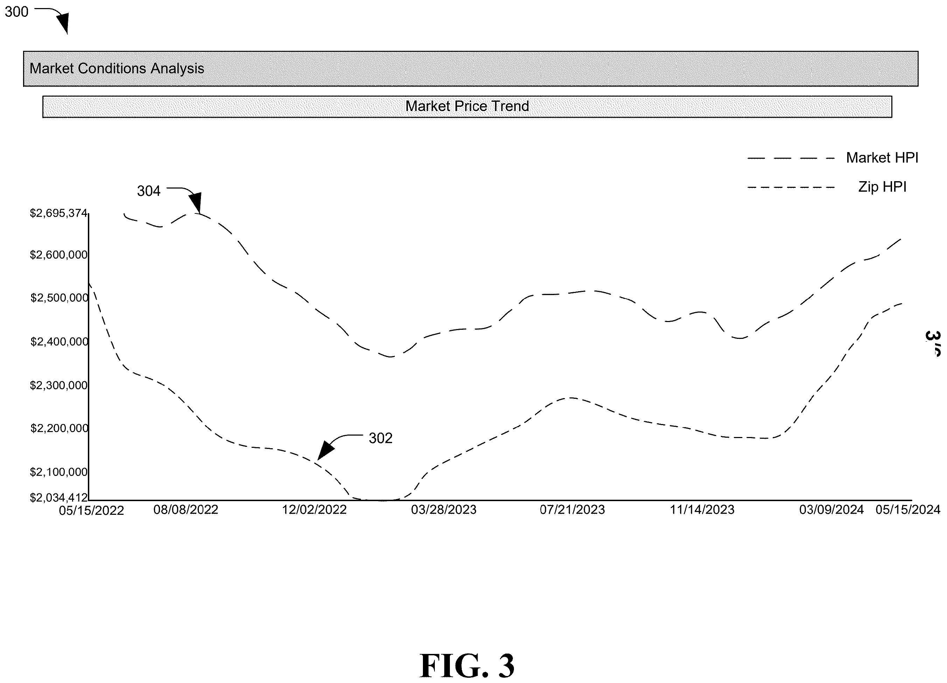

The market parameters display 208 of UI 200 may enable a user to specify filtering parameters to narrow down the relevant market or submarket for evaluation. The market parameters display 208 may have boxes or inputs via which a user may specify minimum and maximum values for a variety of property parameters, such as bedrooms, baths, etc. In the depicted example, a user has specified a minimum of 3 and a maximum of 4 bedrooms, a minimum of 3 bathrooms, and a living area between 2000 and 4500 square feet. In some examples, the market parameters display 208 may also provide graphs or charts showing the distribution of values for the parameters within the selected geographic region (e.g., how many properties include two bedrooms, three bedrooms, four bedrooms, five bedrooms, or six bedrooms). FIG. 3 shows an example chart for market-level HPI relative to Zip-code level HPI.

FIG. 3 depicts an example user interface 300 for a system configured to perform market-level HPI valuation, in accordance with certain embodiments of the present disclosure. In particular, UI 300 shows a graph or chart showing HPI trends over time at both a macro level (in this case, Zip-code level) and at a market level (e.g., based on the market defined via the UI 200 of FIG. 2). The UI 300 and graphs of FIG. 3 may be generated by property valuation server 102 for display via UI 126 of web front-end 104.

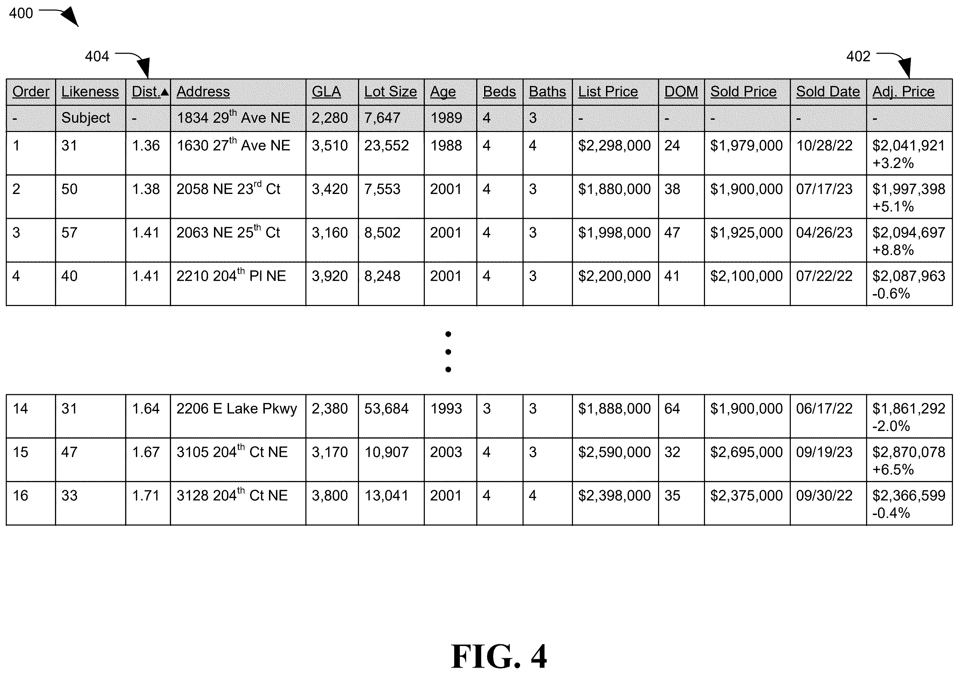

Line 302 may represent the Zip-level HPI, while line 304 may represent the market-level HPI, in a time range from May 15, 2022 to May 15, 2024. As can be seen, there may be stark differences between macro-level HPI values and market-level HPI values, which can affect the accuracy with which old sale values are updated to current standards. For example, a user may select a market of water-front properties, which may have a higher value and follow different trends than other properties within a same macro region, such as Zip code. In the depicted example, Zip-code level market trends in August 2022 showed a decline in price, while the market-level trends showed an increase in price in August 2022. A user may utilize the market trend graph UI 300 to evaluate how a selected market compares to a macro-level market. An example table of comparable property sales is described in regard to FIG. 4.

FIG. 4 depicts an example data table 400 for a system configured to perform market-level HPI valuation, in accordance with certain embodiments of the present disclosure. In particular, table 400 may depict a list of "comps", or comparable property sales, for a selected target or subject property. Table 400 may include a plurality of columns and rows, with rows representing properties and columns identifying features or details of the properties. The table 400 may be generated by property valuation server 102 for display via UI 126 of web front-end 104.

The first listed property, in row 2, may represent a selected subject or target property for which the list of comps was generated. The following rows each list a comparable property from the defined market (e.g., as defined in FIG. 2) that have had sales which may be used by an appraiser or valuation professional to estimate a value for the subject property.

The columns may include various details about the listed properties, or how they relate to the subject property. The "order" column may number each comparable property from, e.g., 1 to 16 based on selected sorting criteria. Sorting criteria may be selected via a sorting arrow that may, for example, be selected by clicking a column header or top column entry via a user input method, and may be toggled between ascending or descending sort order. In this case, the subjects may be ordered based on a "distance" value column 404, which may show a distance of the comparable property from the subject property. The "likeness" column may provide a score of how similar each comp property is to the selected subject property, based on various criteria. An appraiser may give greater weight to the sale prices of more similar properties when valuing the subject property. The columns for address, GLA (gross living area), lot size, age, beds, and baths may list features or characteristics of the displayed properties. The list price, DOM (days on market), sold price, and sold date columns may provide details regarding a most recent sale of the displayed properties.

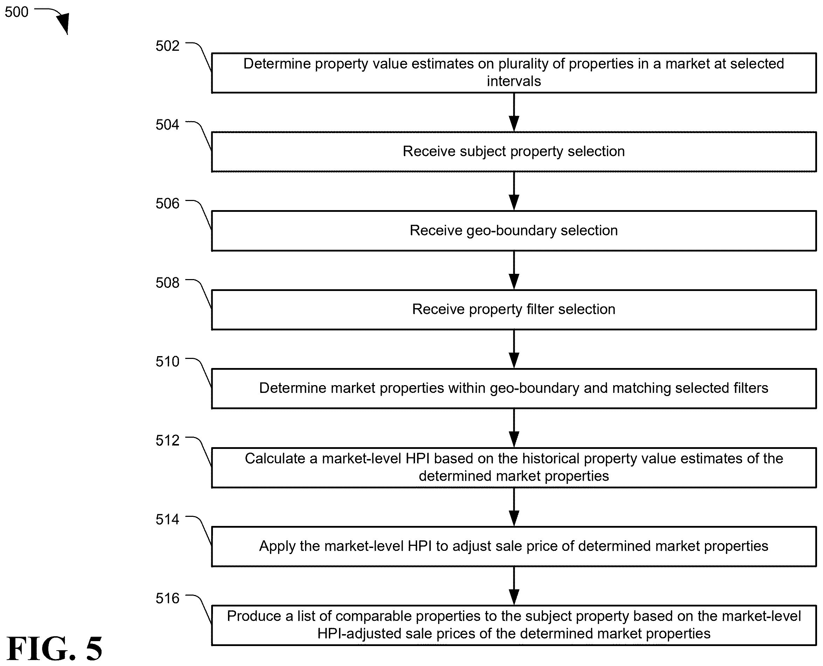

Due to a lack of relevant nearby sales, some of the sales on the comps list 400 may have sold more than a year before the comps list was generated, and therefore the sale price may not reflect a current market value for that property. The "adjusted price" column 402 may show the sale price of each property adjusted to current value based on the calculated market-level HPI. For example, property 1 was sold on October 28, 2022 for $1,979,000. When adjusted based on market-level HPI to a current date, the approximate sale value of the home may have been $2,041,921, representing an increase of 3.2% to its actual sale price. An appraiser or valuation professional may use the adjusted sale price as an accurate estimator of a current value of the property despite the age of the sale. Based on the adjusted sale prices of the comparable properties, a valuation professional may estimate what the value of the subject property may be at this point in time. An example method for market-level HPI valuation is described in regard to FIG. 5.

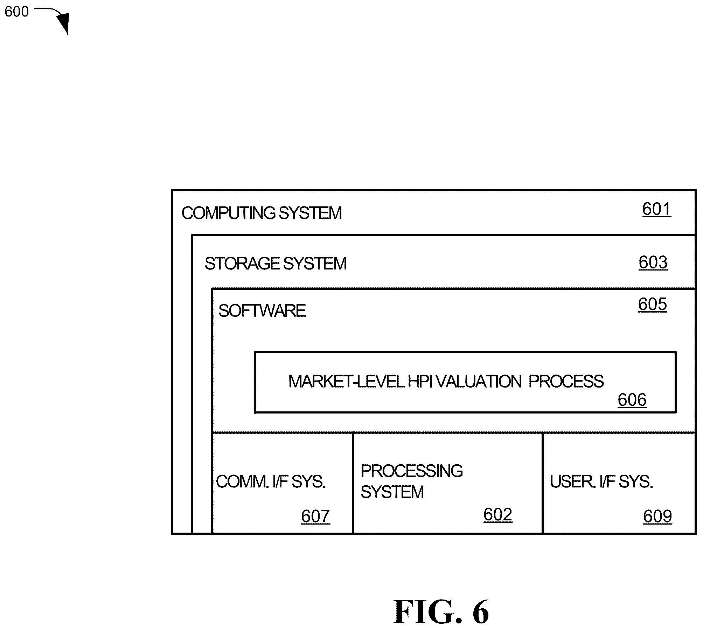

FIG. 5 depicts a flowchart 500 of an example method for market-level HPI valuation, in accordance with certain embodiments of the present disclosure. In particular, flowchart 500 provides an example process for defining a particular market or sub-market, and then generating, at runtime, a house pricing index (HPI) tailored to the defined market, and using that market-level HPI to price-adjust historical property sales within the market. The method of FIG. 5 may be implemented via systems and computing devices such as those depicted in FIG. 1 and FIG. 6.

The method may include determining property value estimates on a plurality of properties in a market at selected intervals, at 502. For example, a service may generate an estimated value for (approximately) every home in a country, a state, or a city. In some instances, certain properties may be excluded or otherwise not included in the blanket property evaluation, but for the purposes of explanation it may be assumed that all or a majority of properties within a region or large-scale market are value-estimated. The property values may be generated manually, or automatically (e.g., using an automated valuation model, AVM), based on factors such as property attributes and comparable sales in the area. The data for valuation, or the estimated values themselves, may be obtained from real estate data such as MLS or public property records. The valuations may be performed at selected interviews, such as once a day, once a week, once a month, or at other intervals. The generated values may be stored, in order to maintain a timeline of values for each evaluated property.

At 504, the method may include receiving a subject property selection. The subject or target property may be a property for which a valuation professional or appraiser wishes to determine a current value, and generate a list of comparable properties. The subject property may be selected off a map, entered into a system via address or coordinates, or otherwise specified. A system receiving the selection may determine characteristics of the property, such as an address, geographic location, number of rooms, lot size, age, other details, or any combination thereof. In some examples, a market-level HPI may be generated without selecting a subject property, merely by identifying a market area, property filters, or both.

The method may include receiving a geographic boundary selection, at 506. The boundary selection may define a geographical area that encompasses and defines the contours of the desired market or sub-market for which a market-level HPI is desired. In an example embodiment, the geographic boundary may be defined based on a distance from the selected subject property (e.g., a circle of a selected radius centered on the subject property). In another example, a user or computing application may draw lines that will define the contours or boundary of a geographical region. The defined region may therefore be of nearly any shape or size, and may not be limited by standard HPI markets such as Zip codes, cities, etc.

At 508, the method may include receiving one or more property filter selection. A property filter may specify property parameters to limit which properties are included in the market-level HPI determination. For example, the filters may specify minimum, maximum, or value ranges for property characteristics, such as lot size, numbers of various kinds of rooms, age of the property, number of floors, etc. In some examples, these filters may be specified or modified by a user, such as a valuation professional. In some embodiments, some filters may be automatically generated, for example based on the selected subject property. For example, a system may be configured to filter properties that fall outside of a predefined range of the characteristics of the subject property (e.g., plus or minus 1 bedroom, 0-1 additional bathrooms, a lot size within 20%, etc.).

The method may include determining properties that lie within the selected geographic boundary and match the selected filters, at 510. For example, the method may include first determining all properties that fall within the selected geographic boundary, and then excluding any properties whose parameters fall outside the selected filters. The remaining properties may comprise the selected market for which the market-level HPI may be generated at runtime. In another example, the geographic boundary and property filter criteria may be used to generate a query to a property database, which may return properties that both lie within the geographic boundary and meet the filter criteria.

At 512, the method may include calculating a market-level HPI based on the historical property value estimates of the determined market properties. For example, the method may include taking the data series of value estimations for each property (as determined at step 502) that is part of the defined market (identified at step 510) for each historical month, and generating a data series of HPI values based on those historical values. By including the value estimations of each property within the market, regardless of whether the property was sold that month, the generated HPI may be robust due to the significant number of data points.

At 510, the method may include applying the market-level HPI to adjust sale prices of determined market properties. For example, the method may include taking the last available sale price and data for each property, and using the market-level HPI to adjust the sale price to current conditions. In another embodiment, the method may include only price-adjusting a subset of the property sales in the market. For example, the method may include determining a selected number of most recent sales within the market (e.g., 5, 10, or 20 most recent sales), and only price-adjusting those sales.

The method may include producing a list of comparable properties to the subject property based on the market-level HPI-adjusted sales prices of the determined market properties. For example, the comps list may be generated to include a selected number of the most recent property sales, or the most recent sales of the properties determined to be most similar to the subject property. The comps list may be provided to a valuer, such as an appraiser or valuation professional, in the form of a chart, database, or other data object. The valuer may then use the market-level HPI-adjusted sales prices to determine a value for the subject property, with a high degree of accuracy. An example system configured for market-level HPI valuation is described in regard to FIG. 6.

FIG. 6 is a diagram of an example system 600 configured to implement market-level HPI valuation, in accordance with certain embodiments of the present disclosure. System 600 may be an example of an apparatus including a computing system 601 that is representative of any system or collection of systems in which the various processes, systems, programs, services, and scenarios disclosed herein may be implemented. For example, computing system 601 may be an example property valuation server 102, web front-end 104, user device 106, property data sources 108, or any of the subcomponents depicted in system 100 of FIG. 1. Examples of computing system 601 include, but are not limited to, server computers, desktop computers, laptop computers, routers, switches, web servers, cloud computing platforms, and data center equipment, as well as any other type of physical or virtual server machine, physical or virtual router, container, and any variation or combination thereof.

Computing system 601 may be implemented as a single apparatus, system, or device or may be implemented in a distributed manner as multiple apparatuses, systems, or devices. Computing system 601 may include, but is not limited to, processing system 602, storage system 603, software 605, communication interface system 607, and user interface system 609. Processing system 602 may be operatively coupled with storage system 603, communication interface system 607, and user interface system 609.

Processing system 602 may load and execute software 605 from storage system 603. Software 605 may include and implement market-level HPI valuation process 606, which may be representative of any of the operations for generating property value estimates, determining a geographic boundary of a market, determining property filters for market properties, generating a market-level HPI data series based on the valuation estimates and the market properties, and using the market-level HPI to price-adjust historical sales within the market, as discussed with respect to the preceding figures. When executed by processing system 602, software 605 may direct processing system 602 to operate as described herein for at least the various processes, operational scenarios, and sequences discussed in the foregoing implementations. Computing system 601 may optionally include additional devices, features, or functionality not discussed for purposes of brevity.

In some embodiments, processing system 602 may comprise a micro-processor and other circuitry that retrieves and executes software 605 from storage system 603. Processing system 602 may be implemented within a single processing device but may also be distributed across multiple processing devices or sub-systems that cooperate in executing program instructions. Examples of processing system 602 may include general purpose central processing units, graphical processing units, application specific processors, and logic devices, as well as any other type of processing device, combinations, or variations thereof.

Storage system 603 may comprise any memory device or computer readable storage media readable by processing system 602 and capable of storing software 605. Storage system 603 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 603 may also include computer readable communication media over which at least some of software 605 may be communicated internally or externally. Storage system 603 may be implemented as a single storage device but may also be implemented across multiple storage devices or sub-systems co-located or distributed relative to each other. Storage system 603 may comprise additional elements, such as a controller, capable of communicating with processing system 602 or possibly other systems.

Software 605 (including market-level HPI valuation process 606 among other functions) may be implemented in program instructions that may, when executed by processing system 602, direct processing system 602 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 605 may include additional processes, programs, or components, such as operating system software, virtualization software, or other application software. Software 605 may also comprise firmware or some other form of machine-readable processing instructions executable by processing system 602.

In general, software 605 may, when loaded into processing system 602 and executed, transform a suitable apparatus, system, or device (of which computing system 601 is representative) overall from a general-purpose computing system into a specialpurpose computing system as described herein. Indeed, encoding software 605 on storage system 603 may transform the physical structure of storage system 603. The specific transformation of the physical structure may depend on various factors in different implementations of this description. Examples of such factors may include, but are not limited to, the technology used to implement the storage media of storage system 603 and whether the computer-storage media are characterized as primary or secondary storage, as well as other factors.

For example, if the computer readable storage media are implemented as semiconductor-based memory, software 605 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 607 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between computing system 601 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Moreover, although specific embodiments have been illustrated and described herein, it should be appreciated that any subsequent arrangement designed to achieve the same or similar purpose may be substituted for the specific embodiments shown.

This disclosure is intended to cover any and all subsequent adaptations or variations of various embodiments. Combinations of the above embodiments, and other embodiments not specifically described herein, will be apparent to those of skill in the art upon reviewing the description. Steps depicted in the flowcharts may optionally be excluded, added, performed in a different order, or performed with different degrees of concurrency than shown (e.g., steps depicted as sequential may be performed concurrently). Additionally, the illustrations are merely representational and may not be drawn to scale. Certain proportions within the illustrations may be exaggerated, while other proportions may be reduced. Accordingly, the disclosure and the figures are to be regarded as illustrative and not restrictive.

## Claims

1. A method comprising:
executing a market-level house price index (HPI) valuation operation via a computing system (601) to generate an HPI for a selected tailored property market at runtime, including:
receiving a geographic boundary selection to define an area for the selected tailored property market;
identifying a plurality of properties within the area;
determining historical value estimates for the plurality of properties;
generating the market-level HPI for the selected tailored property market based on the historical value estimates; and
adjusting historical sale prices of the plurality of properties to current market value based on the market-level HPI.

2. The method of claim 1, further comprising:
receiving a subject property selection for a subject property to be valued based on the selected tailored property market.

3. The method of claim 2, further comprising:
generating a comp list of sales of comparable properties to the subject property within the selected tailored property market.

4. The method of claim 3, further comprising:
adjusting the historical sale prices of the sales on the comp list based on the market-level HPI.

5. The method of any one of claims 1 to 4, further comprising:
receiving a property filter selection to specify property parameters to limit which properties are included in the selected tailored property market;
applying the property parameters to the plurality of properties within the area to provide a list of filtered properties; and
generating the market-level HPI based on the historical value estimates of the list of filtered properties.

6. The method of any one of claims 1 to 5, further comprising:
determining the historical value estimates for the plurality of properties includes:
determining value estimates at a selected time interval for properties in a large geographical region;
storing the value estimates as a data series for the respective properties; and
using the data series for properties in the selected tailored property market as the historical value estimates.

7. The method of any one of claims 1 to 6, further comprising:
receiving the geographic boundary selection includes receiving drawn line inputs defining contours of the area for the selected tailored property market.

8. A memory device (603) storing instructions that, when executed, cause a processor (602) to:
execute a market-level house price index (HPI) valuation operation via a computing system (601) to generate an HPI for a selected tailored property market at runtime, including:
receive a geographic boundary selection to define an area for the selected tailored property market;
identify a plurality of properties within the area;
determine historical value estimates for the plurality of properties;
generate the market-level HPI for the selected tailored property market based on the historical value estimates; and
adjust historical sale prices of the plurality of properties to current market value based on the market-level HPI.

9. The memory device (603) of claim 8, storing instructions that, when executed, cause the processor (602) to further:
receive the geographic boundary selection via drawn line inputs defining contours of the area for the selected tailored property market.

10. The memory device (603) of claim 8 or claim 9, storing instructions that, when executed, cause the processor (602) to further:
receive a property filter selection to specify property parameters to limit which properties are included in the selected tailored property market;
apply the property parameters to the plurality of properties within the area to provide a list of filtered properties; and
generate the market-level HPI based on the historical value estimates of the list of filtered properties.

11. The memory device (603) of any one of claims 8 to 10, storing instructions that, when executed, cause the processor (602) to further:
receive a subject property selection for a subject property to be valued based on the selected tailored property market.

12. The memory device (603) of claim 11, storing instructions that, when executed, cause the processor (602) to further:
generate a comp list of sales of comparable properties to the subject property within the selected tailored property market.

13. The memory device (603) of any one of claims 8 to 12, storing instructions that, when executed, cause the processor (602) to further:
adjust the historical sale prices of the sales on the comp list based on the market-level HPI.

14. The memory device (603) of any one of claims 8 to 13, storing instructions that, when executed, cause the processor (602) to further:
determine the historical value estimates for the plurality of properties, further including:
determine value estimates at a selected time interval for properties in a large geographical region;
store the value estimates as a data series for the respective properties; and
use the data series for properties in the selected tailored property market as the historical value estimates.

15. An apparatus comprising:
a processor (602); and
the memory device (603) of any one of claims 8 to 14.
